# EUROPÄISCHE PATENTSCHRIFT

(11) **EP 0 898 054 B1**
(45) Veröffentlichungstag und Bekanntmachung des Hinweises auf die Patenterteilung: **24.09.2003**
(21) Anmeldenummer: 97810571.6
(22) Anmeldetag: 15.08.1997
(51) Int. Cl.: F01K 23/10, F22G 1/00

(54) **Dampferzeuger und Betriebsverfahren**
Steam generator and operating method
Générateur de vapeur et méthode d'exploitation

(43) Veröffentlichungstag der Anmeldung: 24.02.1999
(73) Patentinhaber: ALSTOM (Switzerland) Ltd, 5401 Baden (CH)
(72) Erfinder: Liebig, Erhard, Dr., 71254 Ditzingen (DE)

(56) Entgegenhaltungen:
- EP-A- 0 777 035
- DE-A- 4 300 192
- DE-C- 803 539
- DE-C- 820 600
- DE-C- 19 619 470
- FR-A- 1 170 791

## Beschreibung

### Technisches Gebiet

Die Erfindung betrifft einen Dampferzeuger mit einer Mehrzahl von Wärmeaustauschflächen zum Vorwärmen, Verdampfen und Überhitzen eines Arbeitsmittels. Sie betrifft ausserdem ein Verfahren zum Betrieb eines solchen Dampferzeugers.

### Stand der Technik

Dampferzeuger in Form von Abhitzekesseln zur Nutzung der Abwärme der Gasturbinen werden in der Regel mit Trommelkessel, mit Zwangdurchlaufkessel oder mit Kombinationen davon ausgeführt. Gegenüber konventionell gefeuerten Kesseln ist indes die Rauchgastemperatur bei Abhitzekesseln begrenzt. Insbesondere die Verdampfung, welche bei konstanter Temperatur vor sich geht, führt zu thermodynamischen und technischen Auslegungszwängen. Um eine möglichst grosse Flexibilität und Anpassbarkeit an das Profil der Rauchgastemperatur zu erreichen, werden bisher folgende Massnahmen vorgesehen:
- Eine Erhöhung der Anzahl Druckstufen; nicht ungewöhnlich sind bis zu 3 Druckstufen mit Zwischenüberhitzung.
- Eine komplizierte Heizflächenaufteilung im oberen Bereich der Rauchgastemperaturen; z.B. wechselseitige Anordnung von Überhitzer- und Zwischenüberhitzerheizflächen.
- Verzweigung und Zusammenführung von Speisewasser- bzw. Dampfströmen.
Damit sollen hohe Frischdampf- und Zwischenüberhitzertemperaturen erreicht werden. Der Vorteil einer geringen Grädigkeit am "Pinch Point" ist mit der Folge eines grossen Aufwandes an Heizflächen verbunden.

Eine Anordnung zur Zwischenüberhitzung von Dampf ist in DE 803539 offenbart. Zur Verringerung von Auslegungszwängen wird dort diskutiert, Hochdruckdampf für eine Zwischenüberhitzung (Führungsgrösse) und eine Kühlung (Restdampf) aufzuteilen und die Teilströme anschliessend wieder im Dampferzeuger zusammenzuführen, wobei der abgezweigte Teilstrom einem Dampfzwischenüberhitzer zugeführt wird, der zum anderen von den heissen Abgasen beaufschlagt wird.
Diese Lösung beschränkt sich auf die Zwischenüberhitzung mittels Hochdruckdampf. Sie ist an das Vorhandensein einer Vorschaltmaschine gebunden und zusätzlich eingegrenzt auf das Vorhandensein eines Trommelkessels sowie eines zusätzlichen Kühlers.

### Darstellung der Erfindung

Der Erfindung liegt die Aufgabe zugrunde, eine Anlage der eingangs genannten Art zu schaffen, die bei möglichst hohen und aufeinander abgestimmten Dampfaustrittstemperaturen eine geringe Differenz zwischen Wasser- und Dampftemperatur einerseits und Rauchgastemperatur andererseits sicherstellt, und die weitgehend ohne Wassereinspritzung zur Dampftemperatur-Regelung auskommt, da diese den exergetischen und energetischen Wirkungsgrad der Anlage herabsetzt.

Erfindungsgemäss wird dies dadurch einen Dampferzeuger sowie ein Verfahren zu dessen Betrieb der in den unabhängigen Ansprüchen genannten Art erreicht.

Durch die vorgeschlagenen Massnahmen wird das rauchgasseitige Temperaturpotential im Kessel maximal ausgenutzt, und es ist eine genauere Regelung der Frischdampftemperatur und bei Zwischenüberhitzeranlagen der Zwischenüberhitzungstemperatur möglich.

### Kurze Beschreibung der Zeichnung

In der Zeichnung sind mehrere Ausführungsbeispiele der Erfindung dargestellt. Es sind nur die für das Verständnis der Erfindung wesentlichen Elemente gezeigt. Die Strömungsrichtung der Arbeitsmittel ist mit Pfeilen dargestellt.
Es zeigen:
- Fig. 1: das Schema einer kombinierten Gas-Dampf-Kraftwerksanlage;
- Fig. 2: das Schema eines Zweidruck-Dampferzeugers.

### Weg zur Ausführung der Erfindung

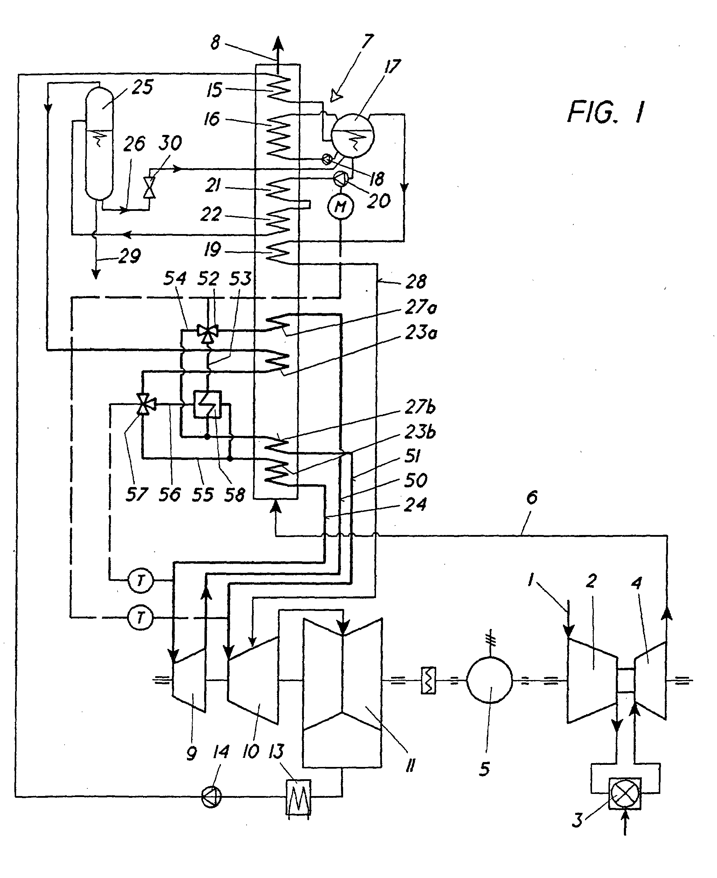

Gemäss Figur 1 wird im Gasturbinensystem einer kombinierten Gas-Dampf-Kraftwerksanlage über eine Leitung 1 angesaugte Frischluft in einem Verdichter 2 auf den Arbeitsdruck verdichtet. Die verdichtete Luft wird in einer beispielsweise mit Erdgas befeuerten Brennkammer 3 stark erhitzt und das so entstandene Brenngas wird in einer Gasturbine 4 arbeitsleistend entspannt. Die dabei gewonnene Energie wird an einen Generator 5 bzw. den Verdichter 2 abgegeben. Das noch heisse Abgas der Gasturbine wird über eine Leitung 6 vom Ausgang der Gasturbine einer Abhitzedampferzeugungsanlage 7 zugeführt und daraus nach Abgabe seiner Wärme über eine Leitung 8 und einen nicht dargestellten Kamin ins Freie geleitet.

Im Wasser-Dampfkreislauf ist eine mehrgehäusige Dampfturbine 9, 10 und 11 auf der gleichen Welle mit der Gasturbine angeordnet. Der in der Niederdruckturbine 11 entspannte Arbeitsdampf kondensiert in einem Kondensator 13. Das Kondensat wird mittels einer Kondensatpumpe 14 direkt in den Dampferzeuger 7 gefördert. Bemerkenswert ist, dass die Anlage keinen entnahmedampfbeheizten Speisewasserbehälter/Entgaser aufweist.

Die Abhitzedampferzeugungsanlage 7 ist als stehender Kessel ausgeführt und arbeitet im vorliegenden Fall nach einem Zweidruck-Dampfprozess. Selbstverständlich könnte auch ein liegender Kessel zur Anwendung gelangen.

Das Niederdrucksystem ist als Umlaufsystem mit Trommel ausgeführt, wobei hier ein Zwangsumlaufsystem gewählt worden ist. Es besteht im Rauchgasweg des Kessels aus einem Niederdruckeconomiser 15, in den das Kondensat eingeleitet wird, einem Niederdruckverdampfer 16 und einem Niederdrucküberhitzer 19. Der Niederdruckverdampfer ist über eine Umwälzpumpe 18 mit einer Trommel 17 verbunden. Der überhitzte Dampf wird über eine Niederdruck-Dampfleitung 28 in eine geeignete Stufe der Mitteldruck-Dampfturbine 10 überführt.

Das Hochdrucksystem ist als Zwangsdurchlaufsystem ausgeführt und damit sowohl für unterkritische als auch für überkritische Parameter auslegbar. Es besteht im Rauchgasweg des Kessels im wesentlichen aus dem Hochdruckeconomiser 21, dem Hochdruckverdampfer 22 und dem Hochdrucküberhitzer 23.

Dem Hochdruckeconomiser 21 wird das Arbeitsmittel über eine Hochdruckspeisepumpe 20 aus der Niederdrucktrommel 17 zugeführt. Auf diese Weise kann der bisher übliche Speisewasserbehälter entfallen. Der überhitzte Dampf wird über eine Frischdampfleitung 24 in den Hochdruckteil 9 der Dampfturbine überführt.

Zur Phasentrennung ist eine Abscheideflasche 25 vorgesehen, in welche der Austritt des Hochdruckverdampfers 22 mündet. Die Abscheideflasche ist an ihrem obereren Ende mit dem Hochdrucküberhitzer 23 verbunden. An ihrem unteren Ende ist sie zusätzlich mit einer Abschlämmleitung 29 versehen. Vom unteren Ende der Abscheideflasche geht ebenfalls eine Rezirkulationsleitung 26 ab, welche ein Absperrorgan 30 enthält und in die Niederdrucktrommel 17 mündet.

Nach der Teilentspannung im Hochdruckteil 9 der Turbine wird der Dampf vor der Überleitung in die Mitteldruckturbine 10 zwischenüberhitzt. Diese Zwischenüberhitzung erfolgt im Beispielsfall in Wärmetauschflächen 27, welche im Rauchgasweg des Dampferzeugers oberhalb des Hochdrucküberhitzers 23 angeordnet sind.

Durch Variation der Drücke und Massenströme im Umlaufsystem und im Durchlaufsystem kann mit einem solchen Dampferzeuger ein weiter Bereich von Kombiprozessen abgedeckt werden.

Mit dem Erreichen der jeweiligen Siedetemperaturen beginnt im Kessel die Dampfproduktion. Der erste Dampf im Niederdrucksystem wird durch Entspannung von rezirkuliertem Hochdruck-Sattwasser aus der Abscheideflasche (25) erzeugt. Die Abscheideflasche (25) sorgt dafür, dass der Hochdrucküberhitzer (23) jederzeit trocken bleibt und am Kesselaustritt frühzeitig überhitzter Dampf zur Verfügung steht. Sobald im Hochdruckverdampfer (22) der für einen stabilen Betrieb notwendige Druck erreicht ist, kann der Frischdampf zum Anfahren der Dampfturbine im Gleitdruckbetrieb verwendet werden.

Gemäss der Erfindung soll nun zur Regelung der Dampftemperaturen eine dampfseitige Wärmeverschiebung vorgenommen werden. Hierzu ist ein Dampf-Dampf-Wärmeaustauscher 58 vorgesehen, der zwischen einer heisseren und einer kälteren Wärmeaustauschfläche so angeordnet wird, dass Wärme vom heisseren dampfförmigen Medium auf das kältere dampfförmige Medium übertragbar ist.

Im Beispielsfall wird die heissere Wärmeaustauschfläche vom Hochdrucküberhitzer 23 und die kältere Wärmeaustauschfläche vom Zwischenüberhitzer 27 gebildet. Zur Realisierung sind der Überhitzer 23 und der Zwischenüberhitzer 27 in Teilflächen 23a, 23b resp. 27a, 27b unterteilt. Die Teilflächen 23a und 23b des Überhitzers 23 sind über eine aus dem Rauchzug des Dampferzeugers herausführende Verbindungsleitung 55 miteinander verbunden, während die Teilflächen 27a und 27b des Zwischenüberhitzers 27 über eine aus dem Rauchzug des Dampferzeugers herausführende Verbindungsleitung 54 miteinander verbunden sind.

Über ein Überhitzerventil 57 zweigt eine erste Heizleitung in Form der Überhitzerheizleitung 56 von der Verbindungsleitung 55 ab und mündet in den Dampf-Dampf-Wärmeaustauscher 58. Vom Austritt dieses Wärmeaustauschers wird diese Überhitzerheizleitung wieder in die Verbindungsleitung 55 eingeführt.

Über ein Zwischenüberhitzerventil 52 zweigt eine zweite Heizleitung in Form der Zwischenüberhitzerheizleitung 53 von der Verbindungsleitung 54 ab und mündet in den Dampf-Dampf-Wärmeaustauscher 58. Vom Austritt dieses Wärmeaustauschers wird diese Überhitzerheizleitung wieder in die Verbindungsleitung 54 eingeführt.

Temperaturmessungen sind vorgesehen in der Frischdampfleitung 24 und in der heissen Zwischenüberhitzerleitung 51. Diese Temperaturmessungen sowie die jeweilige Stellung des Überhitzerventils 57 und des Zwischenüberhitzerventils 52 sind über eine Logik verknüpft, um zu verhindern, dass der Dampf-Dampf-Wärmeaustauscher 58 einseitig durchströmt wird.

Die Wirkungsweise der Erfindung ist folgende:
- Der Wirkungsgrad eines Wasser-Dampfkreislaufs hängt entscheidend von der Frischdampftemperatur ab, so dass deren Regelung erste Priorität geniesst. Wenn die Frischdampftemperatur den vorgeschriebenen Sollwert nicht erreicht, ist die Überhitzerheizleitung 56 auf jeden Fall geschlossen. Entspricht oder übersteigt die Frischdampftemperatur den vorgegebenen Sollwert, so öffnet das Überhitzerventil 57, die Überhitzerheizleitung 56 wird durchströmt und bei ebenfalls durchströmter Zwischenüberhitzerheizleitung 53 wird über den Austauscher 58 Wärme an das Zwischenüberhitzer-System übertragen.
- Bei dieser Fahrweise durchströmt der Zwischenüberhitzerdampf den Austauscher 58 und holt sich dort Wärme vom Überhitzerdampf so lange, bis der vorgegebene Sollwert der Zwischenüberhitzungs-Temperatur erreicht ist. Entspricht (oder übersteigt) die Zwischenüberhitzungs-Temperatur den Sollwert, so werden die beiden Heizleitungen 53 und 56 abgesperrt, der Austauscher 58 wird nicht durchströmt.
- Übersteigt die Zwischenüberhitzungs-Temperatur den Sollwert, so wird über die Speisepumpe 20 die Speisewasser- bzw. Dampfmenge erhöht. Hierzu ist die Speisepumpenregelung in die oben erwähnte Logik miteinbezogen.
- Aus alldem ist erkennbar, dass bei ausgeregeltem System der Dampf-Dampf-Wärmeaustauscher 58 nicht durchströmt ist. Bei unausgeregeltem System hingegen können mit der neuen Massnahme sowohl die Frischdampftemperatur als auch die Zwischenüberhitzungsdampf-Temperatur mit hoher Genauigkeit gefahren werden, wobei auf das unwirtschaftliche Mittel der Wassereinspritzung grösstenteils oder gar ganz verzichtet werden kann.

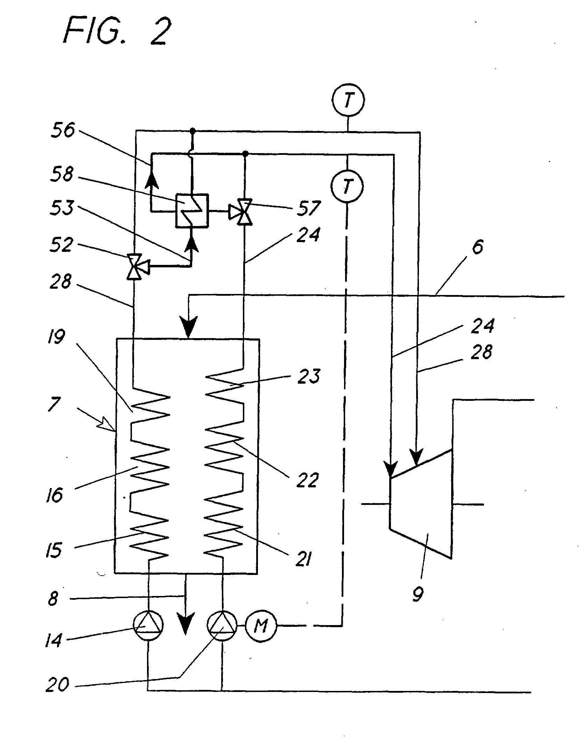

In Fig. 2 ist eine Anwendung der Erfindung bei einem einfachen Zweidruckkessel ohne Zwischenüberhitzung gezeigt. Funktionsgleiche Elemente sind mit den gleichen Bezugszeichen versehen wie in Fig. 1.

Die dortige Abhitzedampferzeugungsanlage 7 ist als stehender Kessel ausgeführt und arbeitet im vorliegenden Fall ebenfalls nach einem Zweidruck-Dampfprozess. Selbstverständlich könnte auch ein liegender Kessel zur Anwendung gelangen. Ebenso ist die Anzahl der Druckstufen im Beispielsfall ohne Belang.

Das Niederdrucksystem ist als Zwangsdurchlaufsystem ausgeführt. Es besteht im Rauchgasweg des Kessels aus einem Niederdruckeconomiser 15, in den das Kondensat über eine Speisepumpe 14 eingeleitet wird, einem Niederdruckverdampfer 16 und einem Niederdrucküberhitzer 19. Der überhitzte Dampf wird über eine Niederdruck-Dampfleitung 28 in eine geeignete Stufe der Dampfturbine überführt.

Das Hochdrucksystem ist als Zwangsdurchlaufsystem ausgeführt und damit sowohl für unterkritische als auch für überkritische Parameter auslegbar. Es besteht im Rauchgasweg des Kessels im wesentlichen aus dem Hochdruckeconomiser 21, dem Hochdruckverdampfer 22 und dem Hochdrucküberhitzer 23. Dem Hochdruckeconomiser 21 wird das Arbeitsmittel über eine Hochdruckspeisepumpe 20 zugeführt. Der überhitzte Dampf wird über eine Frischdampfleitung 24 in den Hochdruckteil 9 der Dampfturbine überführt.

Zur Phasentrennung können in beiden Systemen je eine Abscheideflasche (nicht dargestellt) vorgesehen sein, die dann eingangsseitig mit dem Austritt der Verdampfer 16, 22 und austrittsseitig mit dem Eintritt der Überhitzer 19, 23 verbunden sind.

In diesem Beispiel wird die heissere Wärmeaustauschfläche vom Hochdrucküberhitzer 23 und die kältere Wärmeaustauschfläche vom Niederdrucküberhitzer 19 gebildet. Im Gegensatz zum vorher beschriebenen Beispiel sind hier die betroffenen Wärmetauschflächen, einerseits der Hochdrucküberhitzer 23, andererseits der Niederdrucküberhitzer 19, nicht in Teilflächen unterteilt. Die zum Apparat 58 führenden Leitungen zweigen hier stromabwärts der beiden Überhitzer von den jeweiligen zur Turbine 9 führenden Leitungen 24 resp. 28 ab.

Über ein Hochdruck-Überhitzerventil 57 zweigt eine erste Heizleitung in Form der Hochdruck-Überhitzerheizleitung 56 von der Frischdampfleitung 24 ab und mündet in den Dampf-Dampf-Wärmeaustauscher 58. Vom Austritt dieses Wärmeaustauschers wird diese Hochdruck-Überhitzerheizleitung wieder in die Frischdampfleitung 24 eingeführt.

Über ein Niederdruck-Überhitzerventil 52 zweigt eine zweite Heizleitung in Form der Niederdruck-Überhitzerheizleitung 53 von der Niederdruck-Dampfleitung 28 ab und mündet in den Dampf-Dampf-Wärmeaustauscher 58. Vom Austritt dieses Wärmeaustauschers wird diese Niederdruck-Überhitzerheizleitung wieder in die Niederdruck-Dampfleitung 28 eingeführt.

Die Regelung erfolgt wie beim obigen Ausführungsbeispiel, wobei hier der überhitzte Niederdruckdampf aufgeheizt wird.

Selbstverständlich ist die Erfindung nicht auf die gezeigten und beschriebenen Anlagen mit Zweidrucksystemen beschränkt. Ihre Anwendung ist unabhängig vom Typ und der Bauweise des Abhitzekessels und der Dampfturbinenanlage, vom Kondensationssystem, vom Vorhandensein einer Zwischenüberhitzung, von der Gasturbinenanlage sowie vom gewählten Anfahrprozess. In Abweichung zur gezeigten und beschriebenen Anordnung ist ein liegender Kessel anwendbar. In Kombikraftwerken mit Dreidrucksystem ohne Zwischenüberhitzung wird man den Dampf-Dampf-Wärmeaustauscher mit Vorteil zwischen Hochdruck- und Mitteldrucksystem anordnen; in solchen mit Zwischenüberhitzung wird der Apparat zwischen Hochdrucksystem und Zwischenüberhitzungssystem geschaltet. Auch bei konventionellen Dampferzeugern kann der neue Dampf-Dampf-Wärmeaustauscher zwischen Frischdampfsystem und Zwischenüberhitzungssystem angeordnet werden.

### Bezugszeichenliste

- 1: Leitung (angesaugte Frischluft)
- 2: Verdichter
- 3: Brennkammer
- 4: Gasturbine
- 5: Generator
- 6: Leitung (Abgas)
- 7: Abhitzedampferzeugungsanlage
- 8: Leitung (zum Kamin)
- 9: Hochdruckturbine
- 10: Mitteldruckturbine
- 11: Niederdruckturbine
- 13: Kondensator
- 14: Kondensatpumpe
- 15: Niederdruckeconomiser
- 16: Niederdruckverdampfer
- 17: Niederdrucktrommel
- 18: Umwälzpumpe
- 19: Niederdrucküberhitzer
- 20: Speisewasserpumpe
- 21: Hochdruckeconomiser
- 22: Hochdruckverdampfer
- 23a, 23b: Hochdrucküberhitzer
- 24: Frischdampfleitung
- 25: Abscheideflasche
- 26: Rezirkulationsleitung
- 27a, 27b: Zwischenüberhitzer
- 28: Niederdruck-Dampfleitung
- 29: Abschlämmleitung
- 30: Absperrorgan in 26
- 50: kalte Zwischenüberhitzerleitung
- 51: heisse Zwischenüberhitzerleitung
- 52: Zwischenüberhitzerventil
- 53: Zwischenüberhitzerheizleitung
- 54: Verbindungsleitung zwischen 27a und 27b
- 55: Verbindungsleitung zwischen 23a und 23b
- 56: Überhitzerheizleitung
- 57: Überhitzerventil
- 58: Dampf-Dampf-Wärmeaustauscher

## Patentansprüche

1. Dampferzeuger, mindestens umfassend eine Mehrzahl von Wärmeaustauschflächen zum Vorwärmen, Verdampfen und Überhitzen eines Arbeitsmittels und einen zwischen Wärmeaustauschflächen unterschiedlichen Temperaturpotentials angeordneten absperrbaren Dampf-Dampf-Wärmeaustauscher (58), so dass Wärme von einem dampfförmigen Medium höherer Temperatur auf ein dampfförmiges Medium niedrigerer Temperatur übertragbar ist,
**gekennzeichnet durch**
eine aus einem ersten Strömungspfad von einer Wärmeaustauschfläche höherer Temperatur abzweigende erste Heizleitung (56), welche den Dampf-Dampf-Wärmeaustauscher (58) mit dem dampfförmigen Medium höherer Temperatur beaufschlagt und stromabwärts der Wärmeaustauschfläche höherer Temperatur wieder in den ersten Strömungspfad einmündet, und eine aus einem zweiten Strömungspfad von einer Wärmeaustauschfläche niedrigerer Temperatur abzweigende zweite Heizleitung (53), welche den Dampf-Dampf-Wärmeaustauscher (58) mit dem dampfförmigen Medium niedrigerer Temperatur beaufschlagt und stromabwärts der Wärmeaustauschfläche niedrigerer Temperatur wieder in den zweiten Strömungspfad einmündet.

2. Dampferzeuger nach Anspruch 1 für eine kombinierte Gas-Dampf-Kraftwerksanlage, welche einen Gasturbinenkreislauf und einen Dampfturbinenkreislauf aufweist, wobei die Abgase einer Gasturbine (4) ihre Restwärme über das in einem Mehrdruck-Dampferzeuger strömende Arbeitsmittel an eine Dampfturbine abgeben, und wobei jedes Drucksystem des Dampferzeugers im wesentlichen aus einem Economiser (21), einem Verdampfer (22) und einem Überhitzer (23) besteht,
**dadurch gekennzeichnet,**
**dass** der absperrbare Dampf-Dampf-Wärmeaustauscher (58) zwischen das Hochdrucksystem als heissere Wärmeaustauschfläche und das Niederdrucksystem als kältere Wärmeaustauschfläche geschaltet ist.

3. Dampferzeuger nach Anspruch 1 für eine kombinierte Gas-Dampf-Kraftwerksanlage, welche einen Gasturbinenkreislauf und einen Dampfturbinenkreislauf aufweist, wobei die Abgase einer Gasturbine (4) ihre Restwärme über das im Dampferzeuger strömende Arbeitsmittel an eine Dampfturbine abgeben und wobei der Dampferzeuger im wesentlichen aus einem Economiser (21), einem Verdampfer (22), einem Überhitzer (23) und einem Zwischenüberhitzer (27) besteht,
**dadurch gekennzeichnet,**
**dass** der absperrbare Dampf-Dampf-Wärmeaustauscher (58) zwischen den Überhitzer (23) als heissere Wärmeaustauschfläche und den Zwischenüberhitzer (27) als kältere Wärmeaustauschfläche geschaltet ist.

4. Dampferzeuger nach Anspruch 3, **dadurch gekennzeichnet, dass** der Überhitzer (23) und der Zwischenüberhitzer (27) in Teilflächen (23a, 23b respektive 27a, 27b) unterteilt sind, und dass die erste Heizleitung (56) und die zweite Heizleitung (53) jeweils zwischen den beiden Teilflächen abzweigen und wieder einmünden.

5. Verfahren zum Betrieb des Dampferzeugers nach Anspruch 1, **gekennzeichnet durch** folgende Schritte,
- die erste Heizleitung (56) bleibt undurchströmt, wenn die Endtemperatur im ersten Strömungspfad den vorgeschriebenen Sollwert nicht erreicht,
- entspricht oder übersteigt die Endtemperatur im ersten Strömungspfad den vorgegebenen Sollwert, so öffnet das erste Ventil (57), die erste Heizleitung (56) wird durchströmt und bei ebenfalls durchströmter zweiter Heizleitung (53) wird über den Wärmeaustauscher (58) Wärme an das Arbeitsmittel des zweiten Strömungspfades übertragen,
- entspricht die Endtemperatur im zweiten Strömungspfad dem Sollwert, so werden die beiden Heizleitungen (53) und (56) abgesperrt,
- übersteigt die Endtemperatur im zweiten Strömungspfad den Sollwert, so wird über die Speisepumpe (20) die Speisewasser- bzw. Dampfmenge im ersten Strömungspfad erhöht.

## Claims

1. Steam generator, at least comprising a plurality of heat-exchange areas for the preheating, evaporation and superheating of a working medium and a steam/steam heat exchanger (58), which can be shut off, arranged between heat-exchange areas of different temperature potentials in such a way that heat can be transferred from vaporous medium of higher temperature to vaporous medium of lower temperature, **characterized by** a first heating line (56) which branches off from a first flow path from a heat-exchange area of higher temperature, admits the vaporous medium of higher temperature to the steam/steam heat exchanger (58), and leads into the first flow path again downstream of the heat-exchange area of higher temperature, and by a second heating line (53) which branches off from a second flow path from a heat-exchange area of lower temperature, admits the vaporous medium of lower temperature to the steam/steam heat exchanger (58), and leads into the second flow path again downstream of the heat-exchange area of lower temperature.

2. Steam generator according to Claim 1 for a combined gas/steam power station plant, which has a gas-turbine circuit and a steam-turbine circuit, the exhaust gases of a gas turbine (4) giving off their residual heat to a steam turbine via the working medium flowing in a multi-pressure steam generator, each pressure system of the steam generator essentially comprising an economizer (21), an evaporator (22) and a superheater (23), **characterized in that** the steam/steam heat exchanger (58), which can be shut off, is connected between the high-pressure system as hotter heat-exchange area and the low-pressure system as colder heat-exchange area.

3. Steam generator according to Claim 1 for a combined gas/steam power station plant, which has a gas-turbine circuit and a steam-turbine circuit, the exhaust gases of a gas turbine (4) giving off their residual heat to a steam turbine via the working medium flowing in the steam generator, the steam generator essentially comprising an economizer (21), an evaporator (22), a superheater (23) and a reheater (27), **characterized in that** the steam/steam heat exchanger (58), which can be shut off, is connected between the superheater (23) as hotter heat-exchange area and the reheater (27) as colder heat-exchange area.

4. Steam generator according to Claim 3, **characterized in that** the superheater (23) and the reheater (27) are divided into sectional areas (23a, 23b and 27a, 27b respectively), and **in that** the first heating line (56) and the second heating line (53) in each case branch off and lead in again between the two sectional areas.

5. Method of operating the steam generator according to Claim 1, **characterized by** the following steps:
- flow does not occur through the first heating line (56) if the final temperature in the first flow path does not reach the specified desired value,
- if the final temperature in the first flow path corresponds to or exceeds the predetermined desired value, the first valve (57) opens, flow occurs through the first heating line (56), and, when flow likewise occurs through the second heating line (53), heat is transferred to the working medium of the second flow path via the heat exchanger (58),
- if the final temperature in the second flow path corresponds to the desired value, the two heating lines (53) and (56) are shut off,
- if the final temperature in the second flow path exceeds the desired value, the feedwater quantity or the steam quantity in the first flow path is increased via the feed pump (20).

## Revendications

1. Générateur de vapeur, comprenant au moins une pluralité de surfaces d'échange de chaleur pour le préchauffage, l'évaporation et le surchauffage d'un fluide de travail, et un échangeur de chaleur vapeur-vapeur (58) pouvant être arrêté, disposé entre des surfaces d'échange de chaleur de différent potentiel de température, de sorte que la chaleur provenant d'un milieu sous forme de vapeur puisse être transmise à une température plus élevée à un milieu sous forme de vapeur à plus faible température,
**caractérisé par**
une première conduite de chauffage (56) partant d'un premier chemin d'écoulement d'une surface d'échange de chaleur à température plus élevée, qui frappe l'échangeur de chaleur vapeur-vapeur (58) avec le milieu sous forme de vapeur à température plus élevée et qui débouche à nouveau dans le premier chemin d'écoulement en aval de la surface d'échange de chaleur à température plus élevée, et une deuxième conduite de chauffage (53) partant d'un deuxième chemin d'écoulement d'une surface d'échange de chaleur à température inférieure, qui frappe l'échangeur de chaleur vapeur-vapeur (58) avec le milieu sous forme de vapeur à température inférieure et débouche à nouveau dans le deuxième chemin d'écoulement en aval de la surface d'échange de chaleur à température inférieure.

2. Générateur de vapeur selon la revendication 1, pour une centrale combinée gaz-vapeur, qui présente un circuit de turbine à gaz et un circuit de turbine à vapeur, les gaz d'échappement d'une turbine à gaz (4) délivrant leur chaleur résiduelle par le biais du fluide de travail s'écoulant dans un générateur de vapeur à pressions multiples à une turbine à vapeur, et chaque système de pression du générateur de vapeur se composant essentiellement d'un économiseur (21), d'un évaporateur (22) et d'un surchauffeur (23),
**caractérisé en ce que**
l'échangeur de chaleur vapeur-vapeur pouvant être arrêté (58) est monté entre le système haute pression sous forme de surface d'échange de chaleur plus chaude et le système basse pression sous forme de surface d'échange de chaleur plus froide.

3. Générateur de vapeur selon la revendication 1 pour une centrale combinée gaz-vapeur, qui présente un circuit de turbine à gaz et un circuit de turbine à vapeur, les gaz d'échappement d'une turbine à gaz (4) délivrant leur chaleur résiduelle par le biais du fluide de travail s'écoulant dans le générateur de vapeur à une turbine à vapeur et le générateur de vapeur se composant essentiellement d'un économiseur (21), d'un évaporateur (22), d'un surchauffeur (23) et d'un surchauffeur intermédiaire (27),
**caractérisé en ce que**
l'échangeur de chaleur vapeur-vapeur pouvant être arrêté (58) est monté entre le surchauffeur (23) en tant que surface d'échange de chaleur plus chaude et le surchauffeur intermédiaire (27) en tant que surface d'échange de chaleur plus froide.

4. Générateur de vapeur selon la revendication 3,
**caractérisé en ce que** le surchauffeur (23) et le surchauffeur intermédiaire (27) sont divisés en surfaces partielles (23a, 23b, respectivement 27a, 27b) et **en ce que** la première conduite de chauffage (56) et la deuxième conduite de chauffage (53) partent à chaque fois des deux surfaces partielles et débouchent à nouveau entre celles-ci.

5. Procédé de fonctionnement du générateur de vapeur selon la revendication 1, **caractérisé par** les étapes suivantes :
- la première conduite de chauffage (56) reste non parcourue par le courant lorsque la température finale dans le premier chemin d'écoulement n'atteint pas la valeur de consigne prescrite,
- si la température finale dans le premier chemin d'écoulement correspond à la valeur de consigne prescrite ou la dépasse, la première soupape (57) s'ouvre, la première conduite de chauffage (56) est parcourue par le courant et si la deuxième conduite de chauffage (53) est également parcourue par le courant, de la chaleur est transmise par le biais de l'échangeur de chaleur (58) au fluide de travail du deuxième chemin d'écoulement,
- si la température final dans le deuxième chemin d'écoulement correspond à la valeur de consigne, les deux conduites de chauffage (53) et (56) sont bloquées,
- si la température finale dans le deuxième chemin d'écoulement dépasse la valeur de consigne, la quantité d'eau d'alimentation ou de vapeur dans le premier chemin d'écoulement est accrue par le biais de la pompe d'alimentation (20).
